# EUROPÄISCHE PATENTSCHRIFT

(11) **EP 1 040 999 B1**
(45) Veröffentlichungstag und Bekanntmachung des Hinweises auf die Patenterteilung: **22.12.2010**
(21) Anmeldenummer: 00250109.6
(22) Anmeldetag: 01.04.2000
(51) Int. Cl.: B64C 3/48, B63H 9/06

(54) **Bauteil zur Aufnahme von Kräften, mit einer flexiblen Aussenhaut**
Load carrying element with flexible outer skin
Elément de support de charges avec enveloppe extérieure souple

(30) Priorität: 01.04.1999 DE 19916411
(43) Veröffentlichungstag der Anmeldung: 04.10.2000
(60) Teilanmeldung: 03005183.3
(73) Patentinhaber: Kniese, Leif, 14129 Berlin (DE)
(72) Erfinder: Kniese, Leif, 14129 Berlin (DE)
(74) Vertreter: Grünecker, Kinkeldey, Stockmair & Schwanhäusser Anwaltssozietät

(56) Entgegenhaltungen:
- EP-A- 0 860 355
- AU-A- 6 563 380
- FR-A- 2 715 124
- LU-A- 88 528
- BEITZ W, KÜTTNER K-H: "Dubbel: Taschenbuch für den Maschinenbau (17. Auflage)" 1990 , SPRINGER-VERLAG , BERLIN, DE XP002203654 * Seite C8, Spalte 2, Absatz 2.4.1 - Seite C11, Spalte 2, Absatz 2.4.2; Tabelle 1 *

## Beschreibung

Die Erfindung betrifft ein Bauteil zur Aufnahme von Kräften, mit einer flexiblen Außenhaut, die von einem Gerüst aus an der Innenseite der Außenhaut anscharnierten, in Verbindungsmitteln auslenkbaren Sprossen zu einem im Querschnitt doppelkonvexen Profil gehalten ist.

Aus der EP 0 860 355 A1 ist ein derartiges aerodynamisches Bauteil für Flugzeugkonstruktionen bekannt, das in der Lage ist seinen Querschnitt zu verändern und so das Gesamtprofil des aerodynamischen Bauteils zu beeinflussen. Hierbei kommt es nur auf die veränderbare aerodynamische Ausgestaltung der Vorrichtung an. Diese muß den Gesetzen des Leichtbaus folgen. Aktuatoren müssen das Profil in den engen Grenzen der Aerodynamik über Streben verstellen und in einer vorherbestimmten Position fixieren um ein ströhmumgsgünstiges Profil zu gewährleisten.

Bei der EP 0 453 713 A1 handelt es sich ebenfalls um ein aerodynamisches Bauteil, das aus einem vorderen, einem mittleren und hinterem Segment zusammengesetzt ist und über eine Achse senkrecht zur Skelettlinie des Flügels miteinander verbunden ist. Über diese Achse läßt sich das Profil des Flügels verändern.

Aus der DE 44 11 610 A1 ist ein Flossenantrieb bekannt, der eine tragflügelförmige Profilform aufweist und umkehrbar flexibel ausgebildet ist. Dies wird durch ein Federflächenblatt erreicht, daß eine jeweils entgegen der Bewegungsrichtung der Flosse gekrümmt ist.

Aus der AU-A-65633/80 ist ein aerodynamisches Bauteil bekannt, das alle Merkmale des Oberbegriffs des Anspruchs 1 zeigt.

Aufgabe der vorliegenden Erfindung ist es, ein Bauteil zu schaffen, das flexibel ist, jedoch in sich ein stabiles System darstellt und das auf Druckeinwirkung impulsumwandelnd reagiert.

Diese Aufgabe wird durch ein Bauteil mit den Merkmalen des Anspruchs 1 gelöst.

Bei Druck auf die Außenhaut des erfindungsgemäßen Bauteils gibt der Teil mit der höchsten Auflastdichte nach; gleichzeitig werden das stumpfe und das spitze Ende entgegen der Druckrichtung ausgelenkt. Es entsteht eine Mulde, wobei das spitze Ende und das stumpfe Ende des Gerüstes eine der Druckrichtung entgegengesetzte Bewegung ausführen.

Die Sprossen werden dabei indirekt über die eingeleitete Kraft auf die Außenhaut verstellt oder über die Achse eingeleitet. Um den Effekt noch zu vergrößern, ist ein Hebel vorgesehen, der direkt an einer der Sprossen angelenkt wird und für die Momentabstützung fest mit der Achswelle verbunden ist. Dadurch wird zusätzlich auch eine Kraft von der Sprossen auf die Außenhaut eingeleitet und nicht ausschließlich über die Außenhaut auf die Sprossen. Durch die Formgebung der Außenhaut und der Anordnung der Sprossen die ein Gerüst bilden wird ein Drehmoment in die Achswelle eingeleitet, wird die Außenhaut entgegen der Bewegungsrichtung ausgelenkt.

Durch die Sprossen wird die flexible aber formhaltige Unter- und Oberseite der Außenhaut, die zusammen eine einstückige Einheit ergeben, jeweils in die entgegengesetzte Richtung ausgelenkt. Dies ist auch der Fall, wenn ein Drehmoment über die Achswelle am stumpfen Ende auf das Bauteil übertragen wird. Dieser Effekt wird noch durch einen angelenkten Hebel, der mit einer der Sprossen in direkter Wirkverbindung steht, verstärkt. Ein Verstellen der Sprossen und damit auch ein Verändern der Form der Außenhaut, kann auch durch Servomotoren geschehen, die Diagonal zwischen dem unteren und oberen Ende der Streben angeordnet sind.

Derartige Bauteile können auch in Stuhllehnen und Sitzflächen verbaut werden. Durch die Kombination von zwei Gerüsten, die am stumpfen Ende über einer gemeinsamen Achswelle miteinander verbunden sind, entsteht ein Stuhl und/oder Sessel der in der Lage ist eine Person aufzunehmen und sich der Anatomie der Person anzupassen.

Auch der Einsatz als Hubgabeln bein einem Gabelstapler ist denkbar, ebenso die Verwendung als Höhenruder, beispielsweise in Luftschiffen. Auch ergibt sich die Möglichkeit die Vorrichtung beispielsweise als Flosse für Sport- und Berufstaucher einzusetzen. Bei einer derartigen Ausführung ist keine Achswelle vorgesehen. Hierbei werden mehrere parallel angeordnete Gitter mit dem stumpfen Ende am Schuh der Flosse einstückig angeformt.

Die beabstandeten Gitter werden über eine membraneartig ausgebildetes Elastomer verbunden.

Aufgrund der vergleichbaren Auswirkungen eines Hebels auf flüssige und gasförmige Stoffe, kommen folgende Betrachtungen für beide Stoffe gemeinsam in Betracht. Ist daher im Folgenden von Wasser die Rede, so gilt die Betrachtungsweise in gleichem Maße auch für Gase und umgekehrt.

Bei einer Flosse, die im Wasser bewegt wird, kann nur soviel Kraft übertragen und in Vorschub umgewandelt werden, wie die Schaufelkonstruktion, bzw. Schaufelmaterial, aufnehmen kann. Wird diese Kraft überstiegen, wandelt sich ein Teil der geleisteten Arbeit nur in Verformung der Konstruktion bzw. des Materials um oder ruft im Wasser Wirbel hervor, die Energie verbrauchen, die nicht zur Vortriebsenergie umgewandelt werden kann.

Der Endpunkt einer Flosse schwenkt dieser bei der Auf- und Abwärtsbewegung des Fußes hinterher. Dabei geht ein Teil der aufgewendeten Energie an die Umgebung verloren. Dieses Hinterhergleiten wird bei einigen Flossen zum zeitverzögerten Vorschub umgewandelt

Bisherige Ausführungen versuchen diesen Mangel dadurch auszugleichen, daß sie den Bewegungsablauf in eine wasserverdrängende Vorverformung und eine anschließende aus der Verformung hergeleiteten Schubbewegung umwandeln, indem sie sich an der bewegten Wassermenge mit Hilfe der Federwirkung des Flossenblattes abstoßen. Durch diese Verzögerung wird aber bereits Wasser bewegt, welches nicht mehr zum Vorschub zur Verfügung steht.

Auch hier findet, wie oben unter den festen Stoffen beschrieben, lediglich eine Winkeländerung statt. Die Flosse die an sich das Bestreben hat gerade zu sein, wird bei einem nach unten gerichteten Tritt um den trägen Wasserkörper gebogen, wobei die Hinterkante tendenziell das Bestreben hat, sich der Verformung zu entziehen. Daraus ergibt sich ein Druck auf das darüberliegende ruhige Wasser, das entgegen der Vorschubrichtung bewegt wird und wiederum Energieverluste erzeugt.

Wenn man den Keil bei einer fortlaufenden Hin- und Herbewegung betrachtet, der zwischen der gebogenen Schaufel und der gedachten Linie entsteht, die sich ergibt, wenn der Flosse kein Druck entgegenstehen würde (Hebelachse), zeigt sich, daß die Flosse auf die im Keil befindliche Masse keine Kraft mehr ausüben kann, da sie sich an ihrem Wendepunkt befindet und in die andere Richtung zu verformen beginnt. Diese Masse kann folglich nicht mehr zur Energienutzung verwendet werden.

Die Teilchen auf der druckabgewandten Seite, die durch den entstehenden Unterdruck hinterhergezogen werden, heben einen Teil des oben beschriebenen Energieverlustes wieder auf, indem sie die Flosse, obwohl schon Gegendruck ausgeübt wird, noch weiter in den Keilbereich hineinschieben, können diesen Verlust allerdings nicht vollständig ausgleichen.

Zusätzlich ergibt sich durch die Verformung eine Verkleinerung der Wirkungsfläche infolge der durch die Verformung entstehenden Verkürzung im Verhältnis zur Wirkungsebene (Hebelachse). Bei einem starren Hebel würde zwar keine Verkürzung eintreten, allerdings treten mangels Elastizität vermehrte Wirbel auf.

Um Nachteile der bekannten Kraftübertragungshebel zu beseitigen, wird bei der Erfindung ein Übertragungshebel auf physikalische Körper durch Erzielung eines höheren Wirkungsgrades und der damit verbundenen größeren Kraftübertragung, auch von Antriebsmaschinen ermöglicht. Das Bauteil ist in der Lage, eine lokale Systemverformung, die aus einer Impulseinwirkung entsteht, zeitgleich durch eine Verformung des Systems an anderer Stelle in gleicher Stärke in Richtung des Ursprungsimpulses synchron dynamisch entgegen zusetzen und auszugleichen.

Erfindungsgemäß wird durch eine aus dem Druck resultierende Verformung bewirkt. Dabei weicht das Bauteil nicht dem Druck aus, sondern stellt sich ihm entgegen und leitet ihn in das System. Durch diese Maßnahmen ist es folglich möglich, zwei Punkte elastisch miteinander zu verbinden, ohne daß diese sich am gegenüberliegenden Ende befinden bzw. durch eine Haltevorrichtung miteinander verbunden sein müssen. Ebenso können diese Endpunkte trotz einer aus Druckausübung resultierenden Verformung auf einer Achse bleiben.

Dadurch wird sowohl die Kraftübertragung maximiert und ein Entweichen bei festen Stoffen verhindert, als auch der Energieverlust durch Verwirbelungen verkleinert.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1**: Darstellung einer Hubgabel mit einer zy- lindrischen Auflast und die Verformung der Hubgabel beim Anheben der Auflast und deren dynamisches Verhalten,
- **Figur 2**: Darstellung des erfindungsgemäßen Bau- teils und die dynamische Reaktion beim Heben einer zylindrischen Auflast,
- **Figur 3a-c**: den Bewegungsablauf und die Verformung einer herkömmlichen Flosse im Wasser und die Verkürzung der wirksamen Länge des Flosse,
- **Figur 4a-c**: den Bewegungsablauf des erfindungsgemä- ßen Bauteils in einer Ausführungsform als Flosse im Wasser und das konstant halten der wirksamen Länge der Flosse,
- **Figur 5**: Grundskizze des erfindungsgemäßen Bau- teils im ge- und entspannten Zustand,

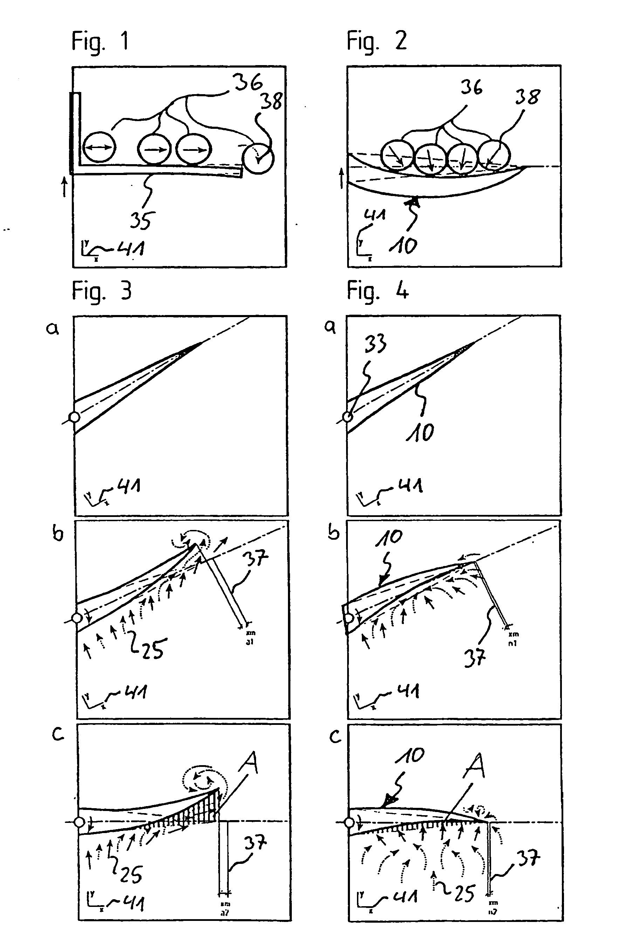

- **Figur** 1-4: das erfindungsgemäße Bauteil als Strebe ausgebildet und mit einer elastomeren Membrane verspannt, in parallel Anord- nung, Streben beweglich zueinander ange- ordnet, verspreizt angeordnet und in Sternform angeordnet,

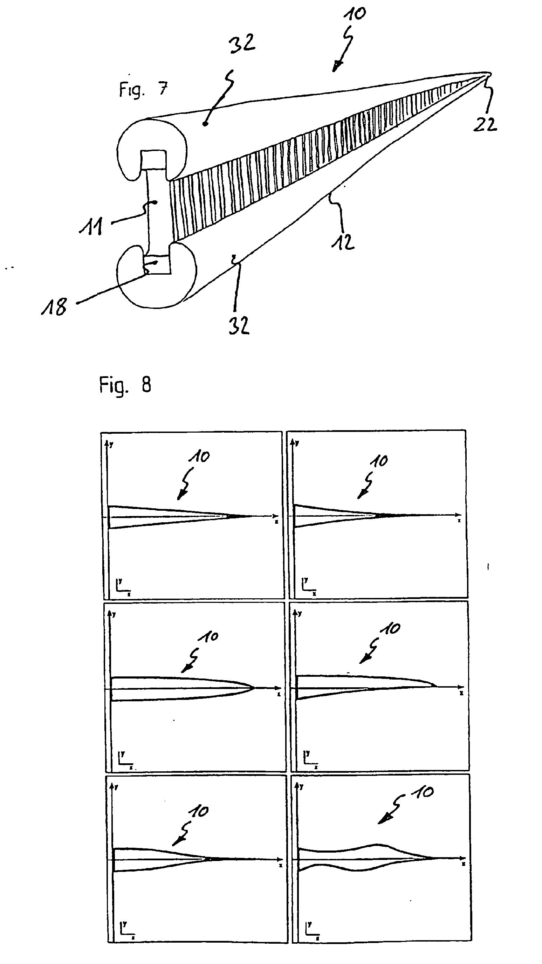

- **Figur 7**: Strebe mit zwei U-förmig ausgebildeten Außenwangen in den die Sprossen an flexiblen Befestigungsmittel gelagert werden,
- **Figur 8a-f**: Darstellung der Seitenansichten von er- findungsgemäßen Bauteilen in ihren ver- schiedenen Ausführungsbeispielen,

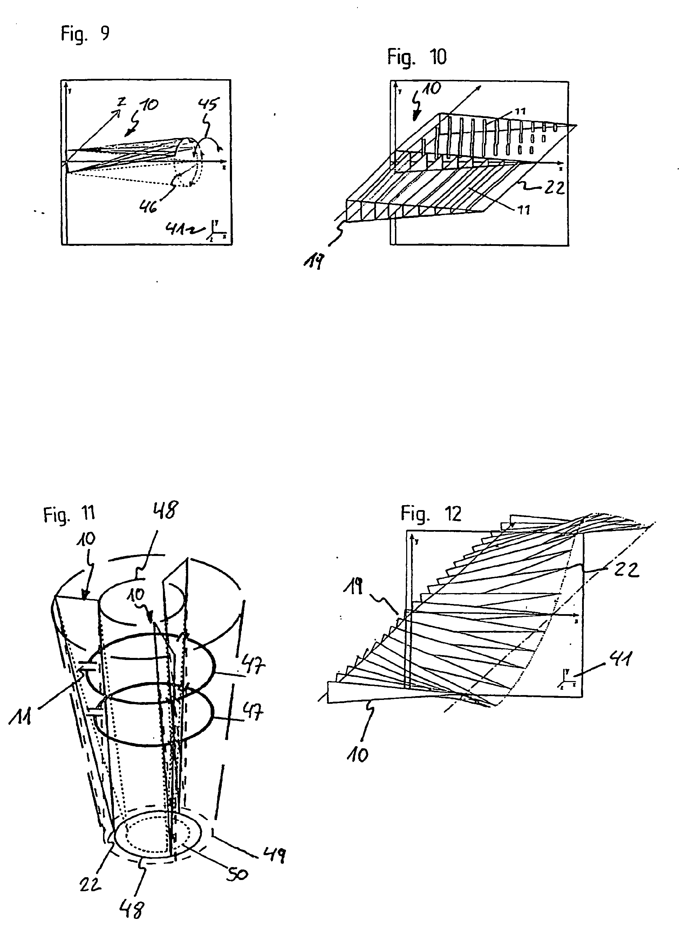

- **Figur 9**: eine kombinierte Auf- und Seitwärtsbewe- gung des Bauteils,
- **Figur 10**: ein zu einer Fläche geschlossenes Bauteil mit seinen unterschiedlichen Distanzhal- tern,
- **Figur 11**: die Bauteile um eine Rohrform gruppiert mit sich verjüngender und verbreitender Stellung und zwei Stabilisationsringen,
- **Figur 12**: eine individuell ansteuerbare Bauteilrei- he, die einen wellenförmigen Bewegungsab- lauf ausführt,

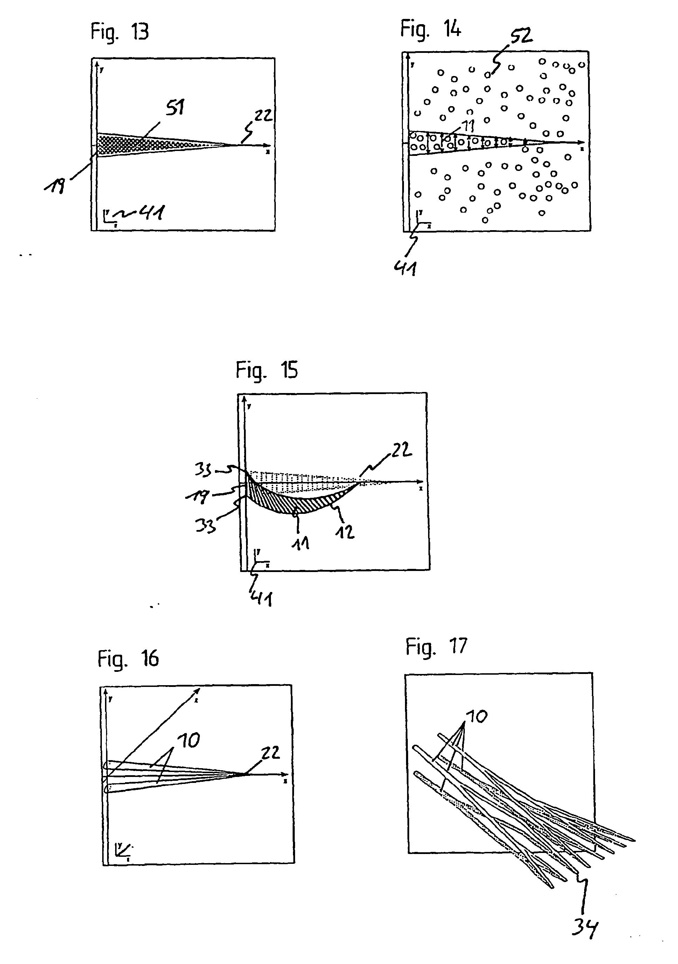

- **Figur 13**: erfindungsgemäßes Bauteil im Querschnitt mit einem Kernteil und der einhüllenden Außenhaut,
- **Figur 14**: lufgefülltes Bauteil mit seinen zugstabi- len Sprossen,
- **Figur 15**: in schematischer Darstellung die Wir- kungsweise und Art der Verformung der Au- ßenhaut und das Auslenken der Querstreben des erfindungsgemäßen Bauteils,
- **Figur 16**: ein Bauteil, bestehend aus einem Wangen- paar das sich in eine Richtung verjüngt,
- **Figur 17**: ein Bauteil, bestehend aus einem Wagen- paar, wobei sich die Enden des Wagenpaa- res auffächern und verjüngen,

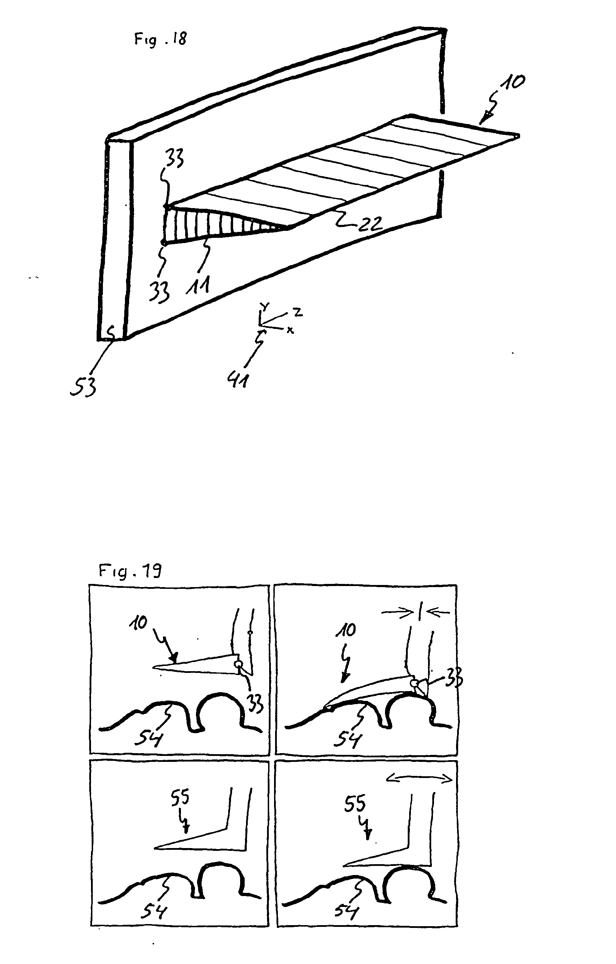

- **Figur 18**: eine Anzahl von Bauteilen nebeneinander zu einem Lattenrost zusammengefügt,
- **Figur 19a-b**: ein Bauteil, daß als Lauffläche eines Fußes für Laufmaschinen ausgebildet ist beim gehen auf unebenen Grund,
- **Figur 19c-d**: Darstellung eines Fußes einer Laufma- schine ohne erfindungsgemäßen Bauteil auf unebenen Grund,

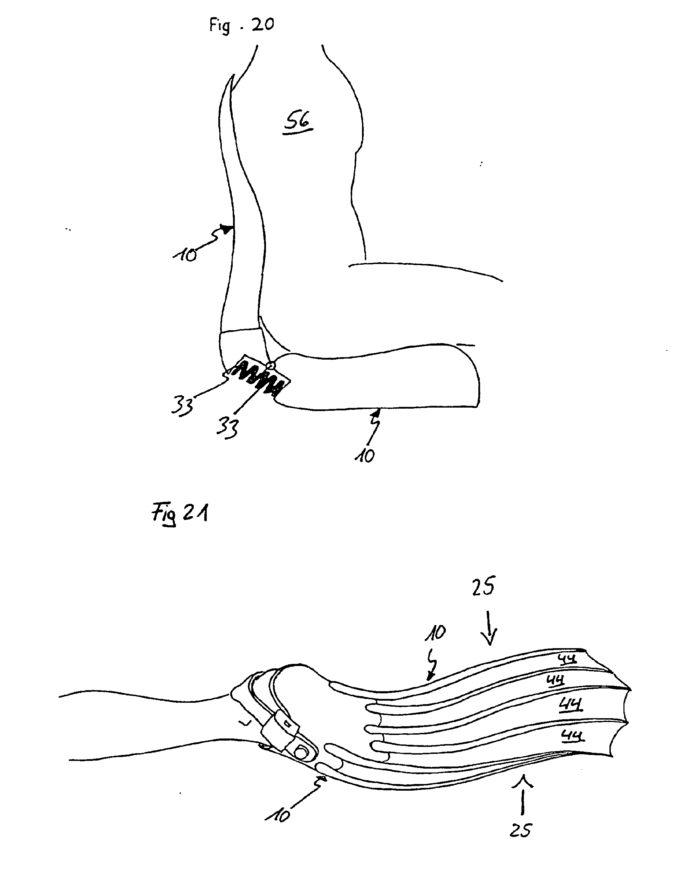

- **Figur 20**: das erfindungsgemäße Bauteil als kon- struktives Element für eine Stuhlrücken- lehne und/oder Sitzfläche,
- **Figur 21**: ein Anwendungsbeispiel als Taucherflosse, in der durch eine elastomere Membrane die erfindunggemäßen Bauteile mit einander verbunden sind,

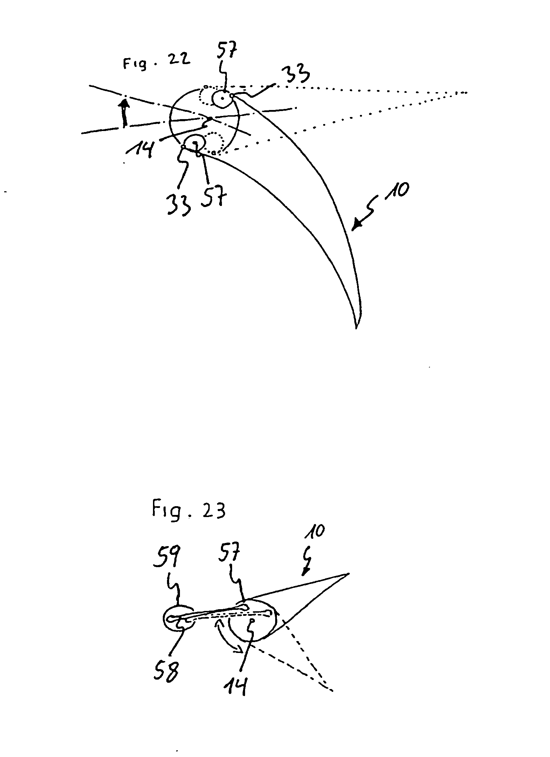

- **Figur 22**: die Ansteuerung eines erfindungsgemäßen Bauteils Achswelle in der zwei weitere Achswellen peripher gelagert sind,
- **Figur 23**: die Ansteuerung eines erfindungsgemäßen Bauteils über eine Achswelle und eine weitere exzentrische Achswelle die von einem Pendelantrieb über eine Schubstange angesteuert wird.

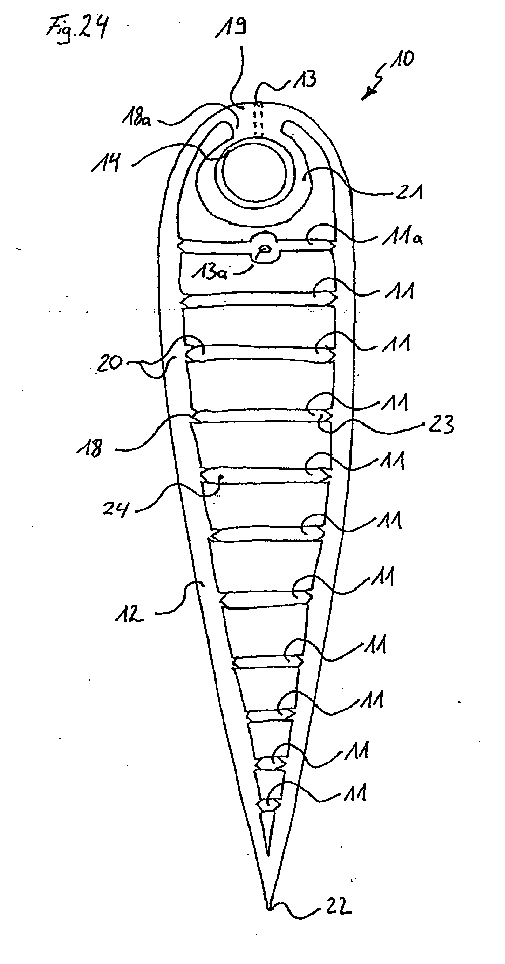

- **Figur 24**: einen Querschnitt durch die erfindungsge- mäße Vorrichtung mit einen aus Sprossen und Außenhaut aufgebauten Gerüst; ohne Achse und Hebel,

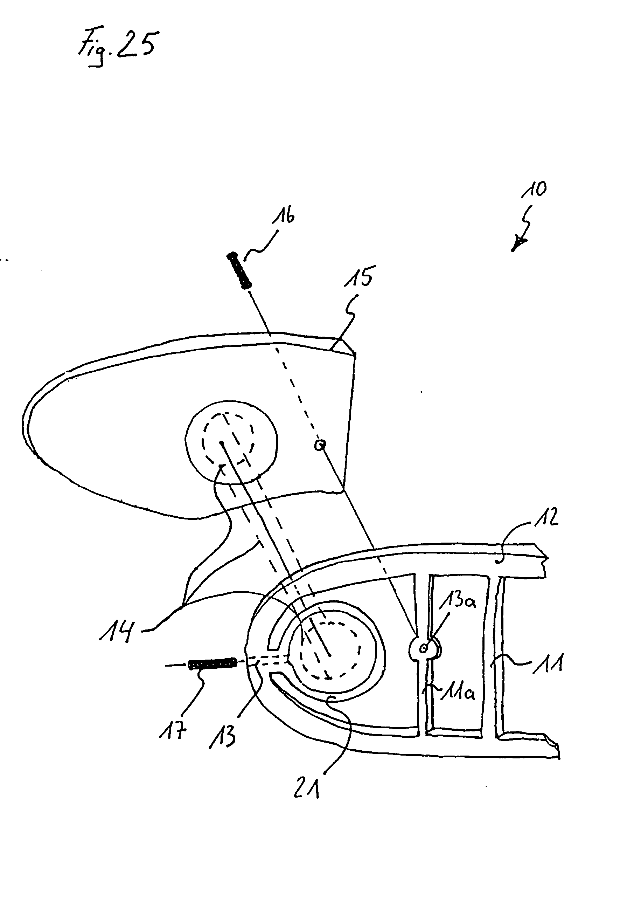

- **Figur 25**: Explosionszeichnung des erfindungsgemäßen Bauteils und den als Vorprofil ausgebil- deten Hebel der an einer Achsewelle befe- stigt ist und mit einer Sprosse über ein Befestigungsmittel in Wirkverbindung steht,

Die in der Figur 24 dargestellte Vorrichtung 10 besteht im wesentlichen aus dem Gerüst 20, das durch die Sprossen 11, 11a zusammen mit der Außenhaut 12 gebildet wird und ein stumpfes Ende 19 und ein spitzes Ende 22 aufweist. Die Sprossen 11, 11a sind durch ein elastisches Befestigungsmittel 18 mit der Außenhaut 12 verbunden und regelmäßig parallel zu einander beabstandet. Das Gerüst 20 weist im Bereich des stumpfen Endes 19 ein Ring 21 auf, der tangential der Außenhaut 12 angeformt ist und elastisch mit dieser in Wirkverbindung bringbar ist. Die Strebe 11a weist eine Bohrung 13a auf.

Figur 25 zeigt die Vorrichtung 10, mit im Bereich des stumpfen Ende 19 angebrachten Vorprofil 15 die mit ihrer Bohrung auf der Achswelle 14 aufgeschoben ist und dadurch drehbar gehalten wird. Auf der selben Achse ist das Gerüst 20 durch den angeformten Ring 21 durch einen Bolzen 17 im Scheitelpunkt des stumpfen Endes 19 arretiert. Die Sprosse 11a ist über einen Zapfen 16, der durch die Bohrung 13a geführt wird, mit der Nase 15 wirkverbunden. Figur 4 zeigt eine schematische Darstellung der Vorrichtung in entspannter Position und in gespannter Position. Es zeigt weiterhin, daß das stumpfe Ende 19 und das spitze Ende 22 entgegengesetzt der Hauptdruckrichtung 25 ausgelenkt werden. Durch eine, auf die flexible Außenhaut 12, einwirkende Auflast mit der Hauptdruckrichtung 25 werden das obere Ende 23 und das untere Ende 24 der Sprossen 11, 11a über die flexibelen Befestigungsmittel 18 gegeneinander verschoben und üben so eine Druck- und eine Zugspannung an der Außenhaut 12 aus.

Die Erfindung bezieht sich auf zwei keilförmig zueinander liegende, gelenkige Wangen, die in der Lage sind, durch Impulseinwirkung entstehende lokale Systemverformung zeitgleich durch gleichartige Verformung des Systems an anderer Stelle in Richtung des Ursprungsimpulses auszugleichen. In der Regel wird diese Vorrichtung anwendungsgemäß aus mindestens zwei Sprossen bestehen, die zueinander entweder parallel oder verspreizt verlaufen.

Um das eigentliche Prinzip zu erklären., wird die nachfolgende Darstellung auf eine Strebe reduziert. Erfindungsgemäß kann die Strebe aber auch in beliebiger Zahl und Anordnung, also zum Beispiel parallel zueinander oder in verspreizter Form, angeordnet werden und durch eine Oberhaut verbunden werden.

Eine Strebe besteht aus mindestens zwei in der Regel gleichlangen Wangen, die in einer keilförmigen Grundform an einem Ende zusammenlaufen und dort miteinander verbunden sind. Am anderen, kraftgebenden Ende sind die Wangen in einem anwendungsabhängigen Abstand zueinander befestigt.

Eine der beiden Wangen ist in Richtung der Ausdehnung der Strebe verschiebbar. Außerdem können beide Wangen mit dem kraftgebenden Körper beweglich verbunden sein. (Figur 22).

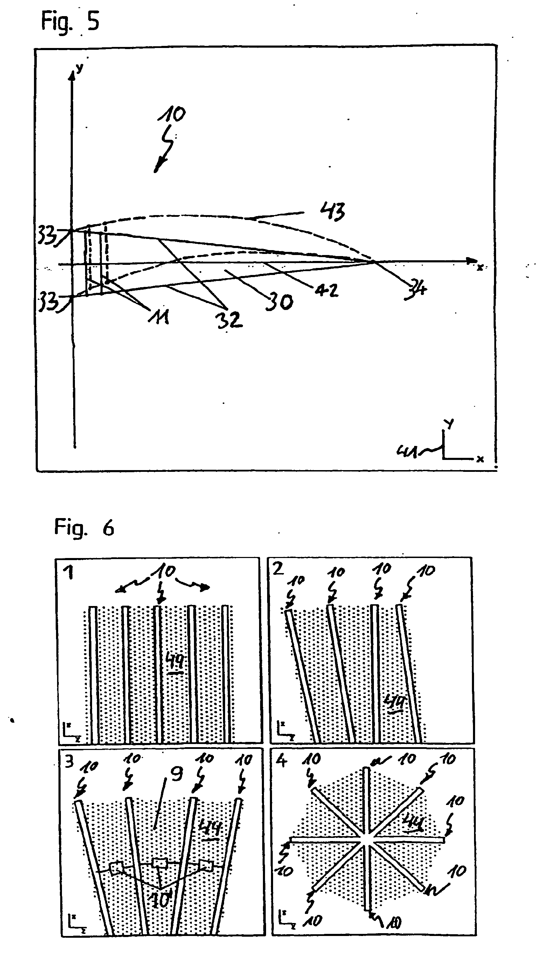

Die Ausformung der Wangen selbst kann dabei ebenso variabel sein. Die einzelnen Wangen können dabei geradlinig, oder zueinander konvex, oder konkav, bzw. "konvex/ konkav" - S- förmig ausgebildet sein, wobei die Steigung wiederum anwendungsabhängig ist. (Figur 8, 6).

Die Wangen sind miteinander durch Abstandhalter verbunden, die ihrem Wesen nach im rechten Winkel zur Mittelachse des entspannten Systems verlaufen und an der Innenseite der Wangen drehbar gelagert sind. Dabei spielt die Ausformung der Abstandhalter keine Rolle, solange sie den auftretenden Kräften standhalten kann. Die Abstandhalter werden im Folgenden vereinfacht als Sprossen bezeichnet.

Auf ein Achsenkreuz übertragen stellt sich die Strebe folgendermaßen dar: Die Mittelachse der Strebe in Seitenansicht liegt auf der X-Achse bei y = 0. Die Befestigungspunkte liegen bei x = 0 und auf der Y-Achse bei spiegelbildlich gleichen Werten. Die Befestigungspunkte der Sprossen verlaufen dabei parallel zur Y-Achse durch das ganze System. Die Verbindung der beiden Wangen untereinander ist bei y = 0.

Die so beschriebene Strebe ist in der Lage in Y-Richtung einwirkende Impulse so umzuwandeln, daß deren Auftreffen auf den Keil zunächst zu einer kurvenförmigen Verformung führt. Diese lokale Verformung wird durch die systeminternen Sprossen sowohl an die dem Impuls entgegengelegene (-ny) Wange übertragen, als auch auf die dem Impuls zugewandte (+ny) Seite. Die impulsabgewandte Wange übt dabei einen Druck auf die Spitze aus. Dadurch zieht die impulszugewandte Wange infolge des gemeinsamen Befestigungspunktes, der unbeweglich bleibt, an der Verbindung am vorderen Ende bei y = 0.

Ausgehend von einer geradlinigen Ausformung der beiden Wangen bleibt die Spitze erfindungsgemäß auf der X-Achse bei y = 0 trotz der vom Impuls verursachten Verformung. D.h. diese Strebe gleicht die lokale Verformung durch eine Gegenbewegung gleicher Impulsstärke an anderer Stelle aus.

Bei dieser Verformung wird lediglich die Gesamtstrebe in ihrer Gesamtlänge auf der X-Achse um mx verkürzt. Dies gilt jedoch nur bei einer der Sprossenkonstruktion angemessenen Impulsstärke. (Figur 5). Dabei hängt der Energieverlust bei der Strebenverformung von der Elastizität in Orientierung der Bewegung der Wangen, bzw. der drehbaren Befestigung der Sprossen an den Wangen ab.

Die Grenze der Strebenverformung hängt unter anderem vom Abstand der Sprossen und deren Ausformung, bzw der gesamten Konstruktion ab. Sowohl die Wangen als auch die Sprossen müssen dabei zug- und druckstabil ausgebildet sein.

Werden anwendungsgemäß mehrere Streben aneinandergereiht, reagiert jede Strebe jeweils auf den auf sie ausgeübten Druck individuell, sofern nicht das Material der gegebenenfalls gespannten Oberhaut die Impulseinwirkung auf die anderen Streben überträgt und diese mit auslenkt.

Dieses Bauteil weist einen dynamischen Hebel auf, der über eine Achse, die in ihrer Lage veränderbar sein kann. Der Hebel besteht aus einem Segment, das sich nach oben und/oder unten ausdehnt und an wenigstens zwei benachbarten Punkten 33 befestigt ist. Das sich daraus ergebende keilförmige Gebilde (Strebe 10) ist am Berührungspunkt 34 an der Spitze des gesamten Systems miteinander verbunden und wird von Distanzhaltern 11 in konstantem Abstand gehalten. Die die Ausdehnung kennzeichnenden gelenkigen Außenwangen 32 sind in Orientierung ihrer Ausdehnung elastisch zug- und druckstabil ausgebildet.

Die Außenwangen 32 verlaufen von ihren Befestigungspunkten 33 geradlinig, gleichlang zu ihrem gemeinsamen Verbindungspunkt 34, wobei sie bei einer anderen Ausgestaltung von ihren Befestigungspunkten 33 verschieden lang zu ihrem gemeinsamen Verbindungspunkt 34 verlaufen können.

Eine beliebige Anzahl von Streben 10 sind entweder parallel, verspreizt zueinander oder mit den stumpfen Enden zueinander in einer Linie, bzw. mehrere sternförmig angeordnet. Die jeweils nebeneinander liegendes Streben 10 sind mit einer Außenhaut 44 aus flexiblem Überzugsmaterial umhüllt.

Die Seitenansicht einer Sprosse 11 ist variabel und die Wangen 32, die zueinander keilförmig stehen, sind geradlinig, konvex, konkav, konvex/konkav (S-förmig) oder als eine andere anwendungsabhängige Freiform ausgebildet. Die Streben 10 werden in einem bestimmten Abstand durch dazwischenliegende Verbindungsvorrichtungen 10' gehalten, wobei sie durch zwischenliegende Verbindungsvorrichtungen in variablem Abstand eingestellt werden.

Die Streben 10 werden von ihren drehbar gelagerten Befestigungspunkten aus in zwei Dimensionen bewegt; dadurch wird eine zusammengesetzte Bewegung erzeugt.

Die Sprossen 11 können eine flächige Ausdehnung haben, wobei die Wangen 32 von einer Fläche gebildet werden können und die Sprossen dabei zwischen den beiden Flächen punktuell oder als durchlaufende Bänder angeordnet sind. Mindestens drei der keilförmigen Streben 10 sind ringförmig um einen Hohlkörper herum derart angeordnet, daß sich dadurch auch eine verjüngende 50 und/ oder erweiternde 40 Rohrform bildet, die in der Lage ist, Strömungen dynamisch umzuleiten.

Die Konstruktion zur Versteifung der Ringform im Verlauf des Systems ist mit federnden oder starren Ringen 47 zur Stabilisierung und Synchronisierung versehen. Die Streben 10 sind dabei von einer elastischen Innen- und eventuell einer Außenhaut überzogen.

Mehrere Streben 10 können parallel über eine Strecke so nebeneinander gereiht sein, daß sie unabhängig voneinander bewegt werden können und sich daraus eine in sich bewegliche langgestreckte Konstruktion ergibt, mit der eine wellenförmige Bewegung ausgeführt werden kann.

Die beiden die Außenflächen bildenden Außenwangen werden mit Hilfe eines elastischen jedoch druckstabilen Formteiles 51 in konstantem Abstand gehalten, ohne sie dabei in ihrer Verschiebung gegeneinander, bzw zum Kern zu behindern. Der Abstand kann durch eine geleeartige Zwischenfüllung 51 in Verbindung mit einer die Strebe umhüllenden geschlossenen Tasche eingehalten werden. Das System kann dabei mit einem einströmendem Fluid wie Wasser oder Luft gefüllt sein.

Die Profilform wird durch das aus der Bewegung herleitende in das System einzuleitende Medium, Wasser bzw. Luft, gefüllt und erhält dadurch seine Stabilität. Die Sprossen können dabei nur zugstabil ausgebildet sein.

Die Befestigungspunkte 33 sind beide starr mit ihrem kraftgebenden Körper verbunden, wobei nur eine Wange 32 starr befestigt, die andere dagegen in Richtung der Ausdehnung der Strebe 10 verschiebbar ist. Beide Wangen 32 können individuell angesteuert werden.

Die Befestigungspunkte 18 der Sprossen liegen im Querschnittsinneren der U-förmig ausgebildeten Außenwange 32. Die Wangen 32 können sich vom kraftgebenden Ende ausgehend zum spitzen Ende hin in ihrem Durchmesser verringern. Auch kann sich eine Wange 32 vom kraftgebenden Ende ausgehend zum spitzen Ende hin in ihrem Durchmesser verändern oder von einer zunächst einsträngigen Wangen ausgehend in zwei oder mehrere Wangenenden auffächern.

Es können Distanzhalter 3 vorgesehen sein, die zug- und druckstabil ausgebildet sind. Die Distanzhalter 3 könne rechtwinklig zur Mittelachse des entspannten Systems verlaufen und an den Innenseiten der Außenwangen 32 drehbar gelagert sein. Dabei kann im Zwischenraum zwischen den Distanzhaltern 3 systemintern diagonal eine Druck- oder Zugbewegung ausgeübt werden.

## Patentansprüche

1. Strebe (10) zur Aufnahme einer auf die Strebe (10) einwirkenden Kraft (25), wobei die Strebe (10) zwei elastische, an Befestigungspunkten (33) mit einem Körper fest oder beweglich und an einem Verbindungspunkt (34) miteinander verbindbare Außenwangen (12, 32), und an der Innenseite der Außenwangen (12, 32) anscharnierte, in Verbindungsmitteln bewegliche Sprossen (11, 11a) umfasst, wobei die Strebe (10) durch die auf eine Seite der Außenwangen (12, 32) von außen einwirkenden Kraft (25) verformbar und unter Einwirkung der Kraft (25) von einem entspannten Zustand in einen gespannten Zustand überführbar ausgestaltet ist und im gespannten Zustand beide Außenwangen (12, 32) in einem Bereich zwischen den Befestigungspunkten (33) und dem Verbindungspunkt (34) in Richtung der Kraft (25) ausgelenkt sind, wobei die Sprossen (11, 11a) gegenüber dem entspannten Zustand in den Verbindungsmitteln gedreht und deren Enden (23, 24) zusammen mit den Außenwangen (12, 32) gegeneinander verschoben sind und das keilförmige Ende der Strebe (10) gegenüber dem in Kraftrichtung ausgelenkten Bereich der Außenwangen (32, 12) gegen die Kraftrichtung verformt ist, **dadurch gekennzeichnet, dass** wenigstens eine der beiden Außenwangen (12, 32) in ihrem Befestigungspunkt (33) in Richtung der Ausdehnung er Strebe (10) verschiebbar ist.

2. Strebe (10) nach Anspruch 1, **dadurch gekennzeichnet, dass** jede Außenwange (12, 32) einen Befestigungspunkt (33) aufweist, die Befestigungspunkte (33) voneinander beabstandet sind und die Außenwangen (12, 32) zwischen den Befestigungspunkten (33) und dem Verbindungspunkt (34) einen Keil bilden.

3. Strebe (10) nach Anspruch 1 oder 2, **dadurch gekennzeichnet, dass** die Außenwangen (12, 32) ein parabolisch gerundetes stumpfes Ende (19) und ein diesem gegenüber liegendes spitzes Ende (22) aufweisen und seitenversetzt parallel zu dem stumpfen Ende (19) ein als zweiseitiger Hebel ausgebildetes Vorprofil (15) angeordnet ist, und das stumpfe Ende (19) und das Vorprofil (15) gegeneinander verschwenkbar auf einer gemeinsamen Achswelle (14) angeordnet sind, wobei eine erste Sprosse (11 a) Ober ein Befestigungsmittel (16) mit dem Vorprofil (15) verbunden ist.

4. Strebe (10) nach einem der Ansprüche 1 bis 3, **dadurch gekennzeichnet, dass** innerhalb der Außenwangen (12, 32) zwischen der ersten Sprosse (11a) und dem stumpfen Ende (19) ein mit dem stumpfen Ende (19) einstückig verbundennes, freillegendes Innenprofil (21) angeordnet ist, und dass das Innenprofil (21) die Achswelle (14) aufnehmbar ausgestaltet ist.

5. Strebe (10) nach einem oder mehreren der Ansprüche 1 bis 4, **dadurch gekennzeichnet, dass** die Strebe (10) durch ein an der Achswelle (14) angreifendes Drehmoment von dem entspannten Zustand in den gespannten Zustand überführbar ausgestaltet ist, wobei im gespannten Zustand das spitze Ende (22) in Richtung des Drehmomentes und das stumpfe Ende (19) gegen die Richtung des Drehmomentes ausgelenkt ist.

6. Strebe (10) nach einem oder mehreren der Ansprüche 1 bis 5, **dadurch gekennzeichnet, dass** die Achswelle (14) in ihrer Lage veränderbar ist und dass ferner ein Hebel vorgesehen ist, welcher fest mit der Achswelle verbunden ist und an einer Sprosse (11,11a) anlenkt, und zusätzlich auch eine Kraft von der Sprosse aus auf die Außenwangen (12, 32) einleitet, so dass die Strebe (10) nicht ausschließlich durch die von außen auf eine Seite der Außenwangen (12, 32) einwirkende Kraft (25) verformbar und von einem entspannten Zustand in einen gespannten Zustand überführbar ausgestaltet ist.

7. Strebe (10) nach einem oder mehreren der Ansprüche 1 bis 6, **dadurch gekennzeichnet, dass** die Sprossen zug- und druckstabil ausgestaltet sind.

8. Strebe (10) nach einem oder mehreren der Ansprüche 1 bis 7, **dadurch gekennzeichnet, dass** Sprossen nur zugstabil ausgestaltet sind.

9. Strebe (10) nach einem oder mehreren der Ansprüche 1 bis 8, **dadurch gekennzeichnet, dass** eine beliebige Anzahl von Sprossen (11, 11a) parallel oder verspreizt zueinander zwischen den Außenwangen angeordnet ist.

10. Strebe (10) nach einem oder mehreren der Ansprüche 1 bis 9, **dadurch gekennzeichnet, dass** die Außenwangen (12, 32) von ihren Befestigungspunkten (33) verschieden lang oder gleichlang zu ihrem Verbindungspunkt (34) verlaufen.

11. Strebe (10) nach einem oder mehreren der Ansprüche 1 bis 10, **dadurch gekennzeichnet, dass** zumindest eine der Außenwangen (12, 32) In ihrem Befestigungspunkt (33) verschiebbar ist.

12. Strebe (10) nach einem oder mehreren der Ansprüche 1 bis 11, **dadurch gekennzeichnet, dass** die Seitenansicht einer Sprosse (11, 11a) variabel und die Außenwangen (12, 32) keilförmig zueinander stehen und gradlinig, konvex, konkav, konvex/konkav, S-förmig oder als anwendungsabhängige Freiform ausgestaltet sind.

13. Strebe (10) nach einem oder mehreren der Ansprüche 1 bis 12, **dadurch gekennzeichnet, dass** die Außenwangen (12, 32) als Fläche ausgebildet sind, deren Sprossen (11, 11a) zwischen den Flächen punktuell oder als durchlaufende Bänder angeordnet sind.

14. Strebe (10) nach einem oder mehreren der Ansprüche 1 bis 13, **dadurch gekennzeichnet, dass** sich die Außenwangen (12, 32) zum spitzen Ende der Strebe (10) hin in zwei oder mehrere Wangenenden auffächern.

15. Strebe (10) nach einem oder mehreren der Ansprüche 1 bis 14, **dadurch gekennzeichnet, dass** die Strebe (10) durch ein in des innere der Strebe (10) eingeleitetes Medium Stabilität erhält.

16. Strebe (10) nach einem oder mehreren Ansprüche 1 bis 15, **dadurch gekennzeichnet, dass** die Strebe (10) ein elastisches, druckstabiles Formteil (51), das die Außenwangen (12, 32) voneinander beabstandet hält, umfasst, wobei die Außenwangen (12, 32) zum Formteil (51) verschiebbar ausgestaltet sind.

## Claims

1. Brace (10) for absorbing a force (25) acting on the brace (10), which brace (10) comprises two elastic outer side pieces (12, 32), which can be fixedly or movably connected to a body at fixing points (33) and to one another at a linkage point (34), and cross-struts (11, 11a) hinge-mounted on the internal face of the outer side pieces (12, 32) and movable in connecting means, and the brace (10) is designed so that it can be deformed by the force (25) acting on a face of the outer side pieces (12, 32) from outside and transferred from a relaxed state to a tensed state under the effect of the force (25) and, in the tensed state, both outer side pieces (12, 32) are deflected in the direction of the force (25) in a region between the fixing points (33) and linkage point (34), and the cross-struts (11, 11a), by contrast with the relaxed state, are rotated in the connecting means and their ends (23, 24) together with the outer side pieces (12, 32) are pushed with respect to one another, and the wedge-shaped end of the brace (10) is deformed opposite the force direction relative to the region of the outer side pieces (32, 12) deflected in the force direction, **characterised in that** at least one of the two outer side pieces (12, 32) can be moved in its fixing point (33) in the direction of extension of the brace (10).

2. Brace (10) as claimed in claim 1, **characterised in that** each outer side piece (12, 32) has a fixing point (33), the fixing points (33) are spaced apart from one another and the outer side pieces (12, 32) form a wedge between the fixing points (33) and the linkage point (34).

3. Brace (10) as claimed in claim 1 or 2, **characterised in that** the outer side pieces (12, 32) have a parabolically rounded blunt end (19) and a pointed end (22) lying opposite to it, and a front profile (15) in the form of a two-ended lever is disposed laterally offset in a parallel arrangement with the blunt end (19), and the blunt end (19) and front profile (15) are mounted so that they can be pivoted towards one another on a common axle shaft (14), wherein a first cross-strut (11a) is connected to the front profile (15) by a fixing means (16).

4. Brace (10) as claimed in one of claims 1 to 3, **characterised in that** a free-lying internal profile (21) integrally joined to the blunt end (19) is disposed inside the outer side pieces (12, 32) between the first cross-strut (11a) and the blunt end (19), and **in that** the internal profile (21) is designed so that it can accommodate the axle shaft (14).

5. Brace (10) as claimed in one or more of claims 1 to 4, **characterised in that** the brace (10) is designed so that it can be transferred from the relaxed state to the tensed state by a torque acting on the axle shaft (14) and wherein, in the tensed state, the pointed end (22) is deflected in the direction of the torque and the blunt end (19) is deflected opposite the direction of the torque.

6. Brace (10) as claimed in one or more of claims 1 to 5, **characterised in that** the axle shaft (14) can be varied in terms of its position and **in that** further a lever is provided, which is fixedly connected to the axle shaft and pivotably mounted on a cross-strut (11, 11a), and additionally also transmits a force from the cross-strut to the outer side pieces (12, 32) so that the brace (10) is designed to be deformed and transferred from a relaxed state into a tensed state not exclusively by the force (25) acting from outside on one side of the outer side pieces (12, 32).

7. Brace (10) as claimed in one or more of claims 1 to 6, **characterised in that** the cross-struts are designed to be resistant to tension and compression.

8. Brace (10) as claimed in one or more of claims 1 to 7, **characterised in that** cross-struts are designed to be resistant only to tension.

9. Brace (10) as claimed in one or more of claims 1 to 8, **characterised in that** any desired number of cross-struts (11, 11a) are disposed parallel with one another or splayed with respect to each other between the outer side pieces.

10. Brace (10) as claimed in one or more of claims 1 to 9, **characterised in that** the outer side pieces (12, 32) extend from their fixing points (33) to their linkage point (34) across different distances or the same distance.

11. Brace (10) as claimed in one or more of claims 1 to 10, **characterised in that** at least one of the outer side pieces (12, 32) is slidable in its fixing point (33).

12. Brace (10) as claimed in one or more of claims 1 to 11, **characterised in that** the side view of a cross-strut (11, 11a) is sitting variably and the outer side pieces (12, 32) are sitting in a wedge-shaped arrangement relative to one another and are of a straight, convex, concave, convex/concave, S-shaped design or based on a free form depending on the application.

13. Brace (10) as claimed in one or more of claims 1 to 12, **characterised in that** the outer side pieces (12, 32) are provided in the form of a surface, the cross-struts (11, 11a) of which are disposed intermittently or in the form of continuous straps between the surfaces.

14. Brace (10) as claimed in one or more of claims 1 to 13, **characterised in that** the outer side pieces (12, 32) fan out into two or more side piece ends towards the pointed end of the brace (10).

15. Brace (10) as claimed in one or more of claims 1 to 14, **characterised in that** stability is imparted to the brace (10) by a medium introduced into the interior of the brace (10).

16. Brace (10) as claimed in one or more of claims 1 to 15, **characterised in that** the brace (10) comprises an elastic, pressure-resistant moulded part (51) which holds the outer side pieces (12, 32) at a distance apart from one another, wherein the outer side pieces (12, 32) are designed to be displaceable relative to the moulded part (51).

## Revendications

1. Élément de renfort (10) pour recevoir une force (25) agissant sur lui, étant précisé que l'élément de renfort (10) comprend deux faces extérieures (12, 32) élastiques qui sont aptes à être reliées de manière fixe ou mobile à un corps au niveau de points de fixation (33) et à être reliées entre elles au niveau d'un point de liaison (34), et des croisillons (11, 11a) qui sont articulés sur le côté intérieur des faces extérieures (12, 32) et qui sont mobiles dans des moyens de liaison, que l'élément de renfort (10) est apte à être déformé par la force (25) qui agit de l'extérieur sur un côté des faces extérieures (12, 32) et est conçu pour pouvoir être amené, sous l'action de la force (25), d'un état détendu à un état tendu, et que dans l'état tendu les deux faces latérales (12, 32) sont déviées dans le sens de la force (25), dans une zone située entre les points de fixation (33) et le point de liaison (34), et étant précisé que les croisillons (11, 11a) sont tournés dans les moyens de liaison, par rapport à l'état détendu, et leurs extrémités (23, 24) sont déplacées l'une par rapport à l'autre avec les faces latérales (12, 32), et que l'extrémité en forme de coin de l'élément de renfort (10) est déformée à l'encontre du sens de la force, par rapport à la zone des faces extérieures (32, 12) déviée dans le sens de la force, **caractérisé en ce que** l'une au moins des deux faces latérales (12, 32) est apte à être déplacée dans son point de fixation (33) dans le sens de l'extension de l'élément de renfort.

2. Élément de renfort (10) selon la revendication 1, **caractérisé en ce que** chaque face extérieure (12, 32) présente un point de fixation (33), les points de fixation (33) sont espacés les uns des autres et les faces extérieures (12, 32) forment un coin entre les points de fixation (33) et le point de liaison (34).

3. Élément de renfort (10) selon la revendication 1 ou 2, **caractérisé en ce que** les faces extérieures (12, 32) présentent une extrémité sans pointe (19) de forme arrondie parabolique et une extrémité pointue (22) située à l'opposé de celle-ci, et il est également prévu, parallèlement à l'extrémité sans pointe (19) et décalé latéralement par rapport à celle-ci, un profilé (15) conçu comme un levier à deux côtés, et l'extrémité sans pointe (19) et ledit profilé (15) sont disposés sur un axe commun (14) de manière à pouvoir pivoter l'un par rapport à l'autre, un premier croisillon (11a) étant relié par un moyen de fixation (16) au profilé (15).

4. Élément de renfort (10) selon l'une des revendications 1 à 3, **caractérisé en ce qu'**il est prévu à l'intérieur des faces extérieures (12, 32), entre le premier croisillon (11a) et l'extrémité sans pointe (19), un profilé intérieur libre (21) qui est relié d'une seule pièce à l'extrémité sans pointe (19), et **en ce que** le profilé intérieur (21) est conçu pour pouvoir recevoir l'axe (14).

5. Élément de renfort (10) selon l'une au moins des revendications 1 à 4, **caractérisé en ce qu'**il est apte à être amené de la position détendue à la position tendue par un couple agissant sur l'axe (14), étant précisé que dans la position tendue, l'extrémité pointue (22) est déviée dans le sens du couple tandis que l'extrémité sans pointe (19) est déviée en sens inverse.

6. Élément de renfort (10) selon l'une des revendications 1 à 5, **caractérisé en ce que** l'axe (14) est apte à changer de position et **en ce qu'**il est également prévu un levier qui est relié de manière fixe à l'axe (14) et qui s'articule sur un croisillon (11, 11a) et introduit aussi en supplément une force, à partir du croisillon, sur les faces extérieures (12, 32), de sorte que l'élément de renfort (10) est conçu pour ne pas se déformer et être amené d'un état détendu à un état tendu que par la seule force (25) agissant de l'extérieur sur un côté des faces extérieures (12, 32).

7. Élément de renfort (10) selon l'une au moins des revendications 1 à 6, **caractérisé en ce que** les croisillons sont conçus pour être stables en traction et en pression.

8. Élément de renfort (10) selon l'une au moins des revendications 1 à 7, **caractérisé en ce que** des croisillons sont conçus pour être seulement stables en traction.

9. Élément de renfort (10) selon l'une au moins des revendications 1 à 8, **caractérisé en ce qu'**il est prévu entre les faces extérieures un nombre quelconque de croisillons (11, 11a) parallèles ou inclinés les uns par rapport aux autres.

10. Élément de renfort (10) selon l'une au moins des revendications 1 à 9, **caractérisé en ce que** les faces extérieures (12, 32) s'étendent sur des longueurs différentes ou sur une même longueur de leurs points de fixation (33) jusqu'à leur point de liaison (34).

11. Élément de renfort (10) selon l'une au moins des revendications 1 à 10, **caractérisé en ce que** l'une au moins des faces extérieures (12, 32) est apte à être déplacée dans son point de fixation (33).

12. Élément de renfort (10) selon l'une au moins des revendications 1 à 11, **caractérisé en ce que** la vue latérale d'un croisillon (11, 11a) est variable et les faces extérieures (12, 32) sont disposées en forme de coin l'une par rapport à l'autre et sont conçues pour présenter une forme droite, convexe, concave, convexe/concave, une forme en S ou une forme libre qui dépend de l'application.

13. Élément de renfort (10) selon l'une au moins des revendications 1 à 12, **caractérisé en ce que** les faces extérieures (12, 32) sont conçues comme des surfaces dont les croisillons (11, 11a) sont disposés entre les surfaces de manière ponctuelle ou sous la forme de bandes continues.

14. Élément de renfort (10) selon l'une au moins des revendications 1 à 13, **caractérisé en ce que** les faces extérieures (12, 32) s'élargissent en direction de l'extrémité pointue de l'élément de renfort (10) pour former deux extrémités de faces ou plus.

15. Élément de renfort (10) selon l'une au moins des revendications 1 à 14, **caractérisé en ce qu'**il acquiert une stabilité grâce à un produit introduit à l'intérieur dudit élément de renfort (10).

16. Élément de renfort (10) selon l'une au moins des revendications 1 à 15, **caractérisé en ce qu'**il comprend une pièce profilée (51) élastique et stable à la pression, qui maintient les faces extérieures (12, 32) éloignées l'une de l'autre, les faces extérieures (12, 32) étant conçues pour pouvoir être déplacées par rapport à la pièce profilée (51).
